# EUROPÄISCHE PATENTSCHRIFT

(11) **EP 4 062 514 B1**
(45) Veröffentlichungstag und Bekanntmachung des Hinweises auf die Patenterteilung: **02.12.2026**
(21) Anmeldenummer: 20800089.3
(22) Anmeldetag: 29.10.2020
(51) Int. Cl.: H02J 3/38, H02M 3/158

(54) **VERFAHREN ZUR ERMITTLUNG EINES BETRIEBSPARAMETERS EINER PV-ANLAGE, PV-ANLAGE MIT EINEM WECHSELRICHTER SOWIE WECHSELRICHTER FÜR EINE DERARTIGE PV-ANLAGE**
METHOD FOR DETERMINING AN OPERATING PARAMETER OF A PV INSTALLATION, PV INSTALLATION HAVING AN INVERTER, AND INVERTER FOR SUCH A PV INSTALLATION
PROCÉDÉ DE DÉTERMINATION D'UN PARAMÈTRE DE FONCTIONNEMENT D'UNE INSTALLATION PV, INSTALLATION PV DOTÉE D'UN ONDULEUR ET ONDULEUR POUR UNE TELLE INSTALLATION PV

(30) Priorität: 18.11.2019 DE 102019131019
(43) Veröffentlichungstag der Anmeldung: 28.09.2022
(73) Patentinhaber: SMA Solar Technology AG, 34266 Niestetal (DE)
(72) Erfinder: KIEL, Edwin, 37130 Gleichen (DE)
(86) Internationale Anmeldenummer: PCT/EP2020/080359
(87) Internationale Veröffentlichungsnummer: WO 2021/099085

(56) Entgegenhaltungen:
- US-A1- 2009 121 549
- US-A1- 2018 366 945

## Beschreibung

Die Erfindung bezieht sich auf ein Verfahren zur Ermittlung eines Betriebsparameters einer Photovoltaik-Anlage (PV-Anlage) mit einer Mehrzahl an Photovoltaik-Modulen (PV-Modulen), die jeweils eine Abschaltvorrichtung umfassen, welche kommunikativ mit einer Sendevorrichtung der PV-Anlage verbunden sind, wobei die Abschaltvorrichtungen jeweils einen Einspeisebetrieb und einen Abschaltbetrieb aufweisen. Mindestens eines der PV-Module der PV-Anlage ist mit einer leistungsoptimierenden Einrichtung ausgerüstet, welche dazu eingerichtet und ausgebildet ist, in einem optimierenden Betriebsmodus (optimierender Betrieb) einen Arbeitspunkt des PV-Moduls einzustellen. Derartige PV-Anlagen umfassen mindestens einen Wechselrichter.

Die Erfindung betrifft auch eine derartige PV-Anlage mit einem Wechselrichter sowie einen Wechselrichter für eine derartige PV-Anlage.

PV-Anlagen und Wechselrichter der oben genannten Art sind aus dem Stand der Technik bekannt. Photovoltaische Anlagen, die im Folgenden mit PV-Anlagen abgekürzt werden, erzeugen aus Sonnenlicht elektrische Energie. Im Allgemeinen werden hierfür eine Mehrzahl an Photovoltaischen Modulen, die im Folgenden mit PV-Modulen abgekürzt werden, elektrisch miteinander zu einem Solargenerator verbunden, wobei die PV-Module selbst wiederum ebenfalls eine Zusammenschaltung elektrischer Solarzellen sind. Solarzellen sind bekannte Vorrichtungen, die Sonnenlicht in elektrische Energie umwandeln. Hierbei dient ein p-n Übergang in einem Halbleitermaterial wie Silizium dazu, die durch das auftreffende Sonnenlicht erzeugten Ladungsträgerpaare zu trennen und an den Kontakten der Solarzelle als Gleichspannung bereitzustellen. Der Solargenerator ist im Allgemeinen DC-seitig an einen Wechselrichter angeschlossen, der zur Umwandlung der vom Solargenerator gelieferten Gleichspannung in Wechselspannung dient. Der Wechselrichter kann diese an seinem AC-Ausgang bereitgestellte Wechselspannung direkt in ein Stromversorgungsnetz einspeisen oder über einen zwischengeschalteten Transformator. Bei dem Stromversorgungsnetz kann es sich beispielsweise um ein öffentliches Stromversorgungsnetz oder um ein begrenztes Inselnetz handeln. Zur Erhöhung der von dem Solargenerator bereitgestellten DC-Spannung können die PV-Module zu einem oder mehreren parallel geschalteten sogenannten Strings zusammengeschaltet sein, wobei jeder String aus einer Reihenschaltung von PV-Modulen aufgebaut ist.

Bei bestimmten Anwendungen ist es erforderlich, dass in einem Notfall die PV-Module abschaltbar sind, um beispielsweise der Feuerwehr eine gefahrlose Löschung eines Feuers im Bereich der PV-Anlage zu ermöglichen. Hierzu weisen die PV-Module sogenannte Abschaltvorrichtungen auf, die in Folge eines zentral abgesetzten Abschaltsignals die PV-Module an ihrem jeweiligen Modulausgang spannungslos schalten. Es kann hierfür beispielsweise eine sogenannte Powerline Kommunikation eingesetzt werden, bei der zwischen dem Wechselrichter und den PV-Modulen die Kommunikationssignale über die ohnehin vorhandenen Leitungen für den elektrischen Leistungstransport übermittelt werden. Für die Kommunikation kommt sowohl eine bidirektionale als auch eine unidirektionale Kommunikation in Frage. Aus Kostenersparnissen ist eine unidirektionale Kommunikation zu den Abschaltvorrichtungen weit verbreitet, wobei dann eine entsprechende zentrale Sendevorrichtung und entsprechende modulnahe Empfangseinrichtungen angeordnet sein müssen.

Um eine maximale elektrische Leistung von den Photovoltaikmodulen zu erhalten, ist es erforderlich, die Betriebsspannung der einzelnen PV-Module in einem Betriebspunkt maximaler Leistung (Maximum Power Point = MPP) zu halten. Dazu kann von dem jeweiligen Wechselrichter ein sogenanntes MPP-Tracking durchgeführt werden, d.h. eine Modulation seiner Eingangsspannung mit dem Ziel, den MPP aufzufinden. Der MPP eines PV-Moduls hängt von seinen aktuellen Betriebsbedingungen, insbesondere seiner aktuellen Temperatur und der aktuellen Einstrahlung auf das PV-Modul ab. Da der Strom durch alle in einem String angeordnete PV-Module grundsätzlich gleich groß ist, können alle PV-Module eines Strings nur dann gleichzeitig in ihrem jeweiligen MPP betrieben werden, wenn ihre Kennlinien, d.h. die Abhängigkeit ihrer Leistung von ihrer Betriebsspannung bzw. ihrem Betriebsstrom, zumindest soweit gleich sind, dass die Kennlinien ihre Maxima bei demselben Strom aufweisen. In wenigen Fällen ist dies nicht der Fall. Hierzu ist es bekannt, einzelne oder alle PV-Module eines Strings über eine von dem PV-Modul umfasste leistungsoptimierende Einrichtung mit benachbarten PV-Modulen des Strings zu verbinden. In einem optimierenden Betrieb dieser leistungsoptimierenden Einrichtung ist es möglich, das PV-Modul mittels der leistungsoptimierenden Einrichtung unabhängig von einem in dem String fließenden Strom in einem Arbeitspunkt maximaler Leistung (MPP) zu betreiben, so dass eine Gesamtleistung des Solargenerators durch den MPP-Tracker des Wechselrichters in Verbindung mit den leistungsoptimierenden Einrichtungen weiter erhöht werden kann. Parallel zu den PV-Modulen ist jeweils eine Bypass-Diode angeordnet, die bei Ausfall eines PV-Moduls oder bei zu geringer Leistung des PV-Moduls leitend wird und den Strom an dem PV-Modul vorbeileitet, um eine Gesamtleistung des Solargenerators nicht zu beeinträchtigen.

Grundsätzlich besteht auf Seite des Anlagenbetreibers ein Informationsbedarf über den Zustand und/oder die Performance der PV-Module. Zur Überwachung der PV-Module sehen kostenintensive Lösungen in jedem PV-Modul eine Sensorik zum Messen der aktuellen Betriebsparameter wie Strom- und Spannungswerte des PV-Moduls vor, wobei die PV-Module über eine bidirektionale Kommunikation an eine zentrale Steuereinheit der PV-Anlage angebunden sind. Dies erfordert einen hohen apparativen Aufwand, so dass auf eine Überwachung der PV-Module häufig gänzlich verzichtet wird.

Aus der Druckschrift US 2009 / 0284078 A1 ist eine PV-Anlage mit einem Systemregelkreis und mehreren lokalen Regelkreisen offenbart. Der Systemregelkreis umfasst eine Systembetriebsfrequenz, während jeder lokale Regelkreis eine lokale Betriebsfrequenz umfasst. Jede der lokalen Betriebsfrequenzen ist mindestens um einen vordefinierten Abstand von der Systembetriebsfrequenz beabstandet.

Die Druckschrift DE 10 2018 102767 A1 offenbart ein Verfahren zur Ermittlung einer Eigenschaft eines über eine Aktivierungseinheit an einen PV-String einer PV-Anlage angeschlossenen PV-Moduls. Dabei wird die Eigenschaft mittels einer dem PV-String zugeordneten Sensoreinheit und mittels einer unidirektionalen Kommunikation von einer generatorfernen Sendeeinheit zu einer dem PV-Modul zugeordneten Empfangseinheit ermittelt. Bei dem Verfahren wird selektiv ein Aktivierungszustand zumindest eines PV-Moduls durch die Aktivierungseinheit geändert. Dabei erfolgt die Änderung von einem ersten Aktivierungszustand, der eine Leistungsentnahme aus dem zugeordneten PV-Modul unterdrückt, in einen zweiten Aktivierungszustand, der eine Leistungsentnahme aus dem zugeordneten PV-Modul ermöglicht.

Die Druckschrift US 2009 / 121549 A1 offenbart ein Verfahren zum Umwandeln von DC-Leistung einer PV-Anordnung in AC-Leistung unter Verwendung eines PV-Wechselrichters. Das Verfahren umfasst: Anlegen der von der PV-Anordnung erzeugten DC-Leistung an den PV-Wechselrichter; Erhöhen der der PV-Anordnung zugeordneten DC-Leistung von einem vorbestimmten Spannungspegel auf eine vorbestimmte DC-Zwischenkreisspannung, wobei die PV-Anordnung durch das Erhöhen geregelt wird, eine Spannung auf dem vorbestimmten Spannungspegel auszugeben; Umwandeln der erhöhten DC-Leistung in AC-Leistung und Deaktivieren der Erhöhung der durch die PV-Anordnung erzeugten DC-Leistung, wenn der Spannungspegel der PV-Anordnung die DC-Zwischenkreisspannung erreicht oder übersteigt.

Die Druckschrift US 2018 / 366945 A1 offenbart ein Verfahren für ein Energiesystem mit einem String mit mehreren Energiequellen, die jeweils über eine Vielzahl von Sicherheitsspannungseinheiten mit Sicherheitsschaltern mit einer Leistungsvorrichtung verbunden sind. Bei dem Verfahren werden eine Vielzahl von Parametern der Leistungsquellen erfasst. Weiterhin wird ein Signal, das von der Leistungsvorrichtung übertragen überwacht. Jeder der Sicherheitsschalter wird als Reaktion auf das Erfassen des Signals innerhalb einer vorbestimmten Zeitdauer ausgeschaltet. Wenn das Signal von der Leistungsvorrichtung nicht innerhalb der vorbestimmten Zeitdauer erfasst wird, wird das Leistungssystems durch Einschalten des Sicherheitsschalters in einen sicheren Betriebsmodus überführt, in dem die Spannungen jeder der Leistungsquellen auf einen Spannungspegel reduziert, der kleiner als ein vorbestimmter Spannungspegel ist.

Der Erfindung liegt die Aufgabe zugrunde, ein Verfahren der eingangs genannten Art anzugeben, mit welchem mit besonders geringem apparativen Aufwand ein Betriebsparameter einer PV-Anlage der eingangs genannten Art ermittelt werden kann, dessen technischer Informationsgehalt einen guten Kompromiss darstellt zwischen der genannten kostenintensiven Überwachung der PV-Module und einem gänzlichen Verzicht auf diese.

Die Aufgabe wird erfindungsgemäß bei einem Verfahren der eingangs genannten Art dadurch gelöst, dass bei dem Verfahren zur Ermittlung eines Betriebsparameters in einem ersten Verfahrensschritt der optimierende Betrieb aller leistungsoptimierenden Einrichtung der PV-Anlage in einen nicht-optimierenden Betrieb überführt wird in Folge eines von der Sendevorrichtung an alle PV-Module übermittelten Abschaltsignals, wobei das Abschaltsignal von einer Empfangseinrichtung eines jeden PV-Moduls empfangen wird. Weiterhin wird in dem ersten Verfahrensschritt bei nicht-optimierendem Betrieb der leistungsoptimierenden Einrichtungen und bei Einspeisebetrieb der Abschaltvorrichtungen eine erste elektrische Gesamtleistung der PV-Module bestimmt. In einem zweiten Verfahrensschritt wird bei optimierendem Betrieb der leistungsoptimierenden Einrichtungen und bei Einspeisebetrieb der Abschaltvorrichtungen eine zweite elektrische Gesamtleistung der PV-Module bestimmt. Der Betriebsparameter wird mittels der Differenz der beiden Gesamtleistungen bestimmt.

Da erfindungsgemäß lediglich die Gesamtleistung des Solargenerators bei unterschiedlichen Betriebszuständen bestimmt wird, kann für die Messung derselben die ohnehin im Wechselrichter vorhandene Sensorik zur Messung der vom Solargenerator bereitgestellten Strom- und Spannungswerte verwendet werden, wodurch auf eine aufwendige Sensorik in jedem PV-Modul verzichtet werden kann. Konkret kann somit die Bestimmung der ersten und der zweiten Gesamtleistung der PV-Module mittels einer Sensoreinrichtung erfolgen, die zur Messung einer von den PV-Modulen an den Wechselrichter gelieferten elektrischen Gesamtleistung ausgebildet und eingerichtet ist. Zudem kann die Sensoreinrichtung zur Übertragung von Messwerten an eine Steuervorrichtung des Wechselrichters der PV-Anlage ausgelegt sein und kommunikativ mit dieser verbunden sein. Vorteilhafterweise kann die Sensoreinrichtung, wie auch die Steuereinrichtung von dem Wechselrichter umfasst sein. Zudem bedarf es keiner bidirektionalen Kommunikation zwischen dem Wechselrichter und den PV-Modulen bei dem erfindungsgemäßen Verfahren, sondern nur einer mittels eines geringeren apparativen Aufwands realisierbaren unidirektionalen Kommunikation vom Wechselrichter zu den PV-Modulen. Die hierfür notwendige Sendevorrichtung kann vom Wechselrichter umfasst sein. Insbesondere kann es sich hierbei um eine Sendevorrichtung handeln, die gleichzeitig auch für das Ansprechen der Abschaltvorrichtungen ohnehin vorzuhalten ist und im vorliegenden Fall zusätzlich auch zur Verwendung bei dem erfindungsgemäßen Verfahren ertüchtigt ist. Dies reduziert den apparativen Aufwand bei dem Verfahren weiter.

Mittels des erfindungsgemäß bestimmten Betriebsparameters lässt sich ein durch die leistungsoptimierten Einrichtungen erzeugter Mehrertrag an elektrischer Leistung ausweisen und folglich hierüber mindestens ein Gesamtbetrieb der leistungsoptimierenden Einrichtungen überwachen. Zur Ermittlung des Betriebsparameters wird u.a. die vom Solargenerator gelieferte Gesamtleistung in den beiden angegebenen unterschiedlichen Betriebszuständen der leistungsoptimierenden Einrichtungen des ersten und zweiten Verfahrensschritts gemessen. Die hierfür verwendete Sensoreinrichtung ist zum Einlesen der Messwerte an eine Steuervorrichtung des Wechselrichters angeschlossen. Auch die Sendevorrichtung ist an diese Steuervorrichtung angeschlossen, da für das Verfahren die Messungen bei geändertem Betriebszustand der leistungsoptimierenden Einrichtungen vorzunehmen und damit aufeinander abzustimmen sind. Als Sendevorrichtung kann die zum Ansprechen der Abschaltvorrichtungen vorzuhaltende und für das erfindungsgemäße Verfahren ebenfalls verwendbare Sendevorrichtung verwendet werden. Diese ist im Allgemeinen ohnehin an die Steuervorrichtung des Wechselrichters angeschlossen, da ein Abschaltbefehl an die Abschaltvorrichtungen auch von der Steuervorrichtung des Wechselrichters selbst via Sendevorrichtung absetzbar sein muss für den Fall einer vom Wechselrichter detektierten Situation, die eine Abschaltung der PV-Module verlangt. Somit kann das Verfahren mit geringem apparativem Aufwand umgesetzt werden. An dieser Stelle sei noch angemerkt, dass bei dem erfindungsgemäßen Verfahren der zweite Verfahrensschritt vor oder nach dem ersten Verfahrensschritt erfolgen kann. Zudem muss der Betriebsparameter nicht der Differenz der beiden gemessen Gesamtleistungen entsprechen, sondern lediglich mittels der Differenz ermittelt werden.

Vorteilhafte Ausgestaltungen der Erfindung sind in der nachfolgenden Beschreibung und den Unteransprüchen angegeben, deren Merkmale einzeln und in beliebiger Kombination miteinander angewendet werden können.

Gemäß einer vorteilhaften Ausgestaltung der Erfindung können in einem Zeitraum mehrfach die beiden Verfahrensschritte aufeinanderfolgend durchgeführt werden, wobei der Betriebsparameter ein über den Zeitraum gemittelter Durchschnittswert von Einzelwerten ist, die wiederum mittels der jeweiligen Differenzen der beiden Gesamtleistungen ermittelt werden.

Bei dem Zeitraum kann es sich beispielsweise um die Zeitspanne von Sonnenaufgang bis Sonnenuntergang eines Tags handeln. Der Betriebsparameter kann in diesem Fall eine Abschätzung eines an diesem Tag durch die leistungsoptimierenden Einrichtungen erwirtschafteten Mehrertrags an elektrischer Energie sein, der dem Anlagenbetreiber über eine Schnittstelle des Wechselrichters zu einer Leitwarte zugänglich gemacht wird.

Bei dem Abschaltsignal kann es sich beispielsweise um ein reales Signal mit dem entsprechenden Informationsgehalt handeln, eine Abschalthandlung vorzunehmen, oder um das Ausbleiben eines Keep-alive-Signals, wobei das Ausbleiben des Signals von den Empfangseinrichtungen als Abschaltsignal interpretiert wird. Beide Varianten sind möglich und sollen unter den Wortlaut Abschaltsignal fallen.

Weiter kann vorteilhaft vorgesehen sein, dass in Folge des Empfangs des Abschaltsignals durch die Empfangseinrichtungen der PV-Module die Abschaltvorrichtungen in einen Abschaltbetrieb wechseln und bei den PV-Modulen mit einer leistungsoptimierenden Einrichtung diese in einen nicht-optimierenden Betrieb wechseln. Anschließend sendet die Sendevorrichtung an alle PV-Module ein Einspeisesignal, wobei in Folge des Empfangs des Einspeisesignals durch die Empfangseinrichtungen der PV-Module die Abschaltvorrichtungen in einen Einspeisebetrieb wechseln und bei PV-Modulen mit einer leistungsoptimierenden Einrichtung diese zeitverzögert den optimierenden Betrieb wieder aufnimmt, und die erste elektrische Gesamtleistung nach dem Betriebswechsel der Abschaltvorrichtungen zurück in den Einspeisebetrieb und vor dem Betriebswechsel der leistungsoptimierenden Einrichtungen in den optimierenden Betreib gemessen wird.

Bei dem Abschaltsignal kann es sich um ein Standard-Abschaltsignal für die Abschaltvorrichtungen handeln. Die Erfindung kann somit auf die unidirektionale Kommunikation vom Wechselrichter zu den PV-Modulen für die Abschaltvorrichtungen aufsetzen. Die leistungsoptimierenden Einrichtungen können hierfür kommunikativ an die Empfangseinrichtungen der Abschaltvorrichtungen oder an eine Steuerung der Abschaltvorrichtungen angebunden sein, so dass in Folge des Empfangs des Abschaltsignals die leistungsoptimierenden Einrichtungen in den nicht-optimierenden Betrieb wechseln und in Folge des Empfangs eines Einspeisesignals die leistungsoptimierenden Einrichtungen mit einer vorgegebenen Zeitverzögerung in den optimierenden Betrieb wechseln. Da die Steuerung der Abschaltvorrichtungen für den Betriebswechsel der Abschaltvorrichtungen keine vorgegebene Zeitverzögerung vorsehen kann, kann durch eine schnelle Aufeinanderfolge des Einspeisesignals auf das Abschaltsignal die Unterbrechung des Einspeisebetriebs der PV-Module geringgehalten werden bzw. vernachlässigbar sein. Zur erfindungsgemäßen Ermittlung des Betriebsparameters kann der Betriebswechsel der Abschaltvorrichtung vom Einspeisebetrieb zum Abschaltbetrieb und zurück in den Einspeisebetrieb somit ein echter Betriebswechsel der Abschaltvorrichtung sein oder zur Minimierung von Verlusten aufgrund der Trägheit des Systems nur ansatzweise erfolgen, so dass aufgrund der Trägheit des Systems der Einspeisebetrieb des PV-Moduls nur sehr kurz oder gar nicht unterbrochen wird und lediglich bei PV-Modulen mit einer leistungsoptimierenden Einrichtungen der optimierende Betrieb der leistungsoptimierenden Einrichtungen unterbrochen wird. Der Messzeitpunkt für die erste Gesamtleistung ist auf die vorgegebene Zeitverzögerung abgestimmt, so dass dieser bei Einspeisebetrieb der PV-Module und vor der Wiederaufnahme des optimierenden Betriebs der leistungsoptimierenden Einrichtungen erfolgt. Der Messzeitpunkt für die zweite elektrische Gesamtleistung kann vor dem Senden des Abschaltsignals oder nach der Wiederaufnahme des optimierenden Betriebs der leistungsoptimierenden Einrichtungen erfolgen, insbesondere zeitnah, um die Messung der beiden elektrischen Gesamtleistungen bei annähernd gleichen Umgebungsbedingen durchzuführen.

Es kann vorteilhaft vorgesehen sein, dass in Folge des Empfangs des Abschaltsignals durch die Empfangseinrichtung der PV-Module der Betrieb der Abschaltvorrichtungen hiervon unberührt bleibt, wobei bei den PV-Modulen mit einer leistungsoptimierenden Einrichtung diese den optimierenden Betrieb einstellen und die erste elektrische Gesamtleistung nach der Einstellung des optimierenden Betriebs und vor dessen Wiederaufnahme gemessen wird.

Das Abschaltsignal gemäß dieser Ausgestaltung der Erfindung entspricht somit nicht einem Standard-Abschaltsignal für die Abschaltvorrichtungen, da es den Betrieb der Abschaltvorrichtungen unberührt lässt. Das Abschaltsignal kann beispielsweise dem Standard-Abschaltsignal mit einem Zusatzbit am Ende des Signals entsprechen. Die Ausgestaltung der Erfindung kann hierbei die ohnehin vorhandene Sendevorrichtung für die Kommunikation des Wechselrichters mit den Abschaltvorrichtungen der PV-Module verwenden, so dass der apparative Aufwand reduziert ist. Auch kann die Ausgestaltung der Erfindung die ohnehin für die Abschaltvorrichtungen vorgehaltenen Empfangseinrichtungen verwenden, wobei die leistungsoptimierenden Einrichtungen kommunikativ mit der jeweiligen Empfangseinrichtung oder der Steuerung der jeweiligen Abschaltvorrichtung verbunden sind. Die leistungsoptimierenden Einrichtungen könnten aber auch unabhängig von den Abschaltvorrichtungen jeweils eine eigene Empfangseinrichtung und eine eigene Steuerung umfassen. Da die leistungsoptimierenden Einrichtungen nicht den gleichen Normen wie die Abschaltvorrichtungen unterworfen sind und aus diesem Grund sich auch wieder einschalten dürfen, ohne dass zuvor auf ein Einspeisesignal der Sendevorrichtung gewartet werden muss, kann bei dieser Ausgestaltung der Erfindung ebenfalls eine Zeitspanne vorgegeben sein, nach der die leistungsoptimierenden Einrichtungen von der Steuerung der Modulelektronik automatisch angewiesen werden, den optimierenden Betrieb wieder aufzunehmen. Der Zeitpunkt der Messung der ersten elektrischen Gesamtleistung wird von der Steuervorrichtung des Wechselrichters entsprechend der vorgegebenen Zeitspanne vor Ablauf von dieser gelegt. Alternativ könnte die Sendevorrichtung auch ein Einschaltsignal senden, welches den Betrieb der Abschaltvorrichtungen unberührt lässt und die Steuerung der leistungsoptimierenden Einrichtungen dazu veranlasst, diese zurück in den optimierenden Betrieb zu versetzen.

Eine weitere Aufgabe der Erfindung ist es, einen Wechselrichter der eingangs genannten Art für eine derartige Photovoltaik-Anlage anzugeben, mit welchem mit besonders geringem apparativem Aufwand dieser bei dem Verfahren nach mindestens einem der Patentansprüche 1 bis 5 eingesetzt werden kann.

Der Wechselrichter umfasst einen DC-seitigen Anschluss für mindestens ein PV-Modul, einen AC-seitigen Anschluss für ein Stromversorgungsnetz, eine Wechselrichterbrücke zur Umwandlung von DC-Spannung in AC-Spannung, eine Sendevorrichtung und eine die Sendevorrichtung ansteuernde Steuervorrichtung zur Steuerung des Wechselrichterbetriebs sowie einer unidirektionalen Kommunikation des Wechselrichters via der Sendevorrichtung mit den PV-Modulen, eine Sensoreinrichtung, welche zur Messung einer von den PV-Modulen an den Wechselrichter gelieferten elektrischen Gesamtleistung ausgebildet und eingerichtet ist und zur Übertragung der Messwerte an die Steuervorrichtung mit dieser kommunikativ verbunden ist.

Die erfindungsgemäße Aufgabe wird bei einem derartigen Wechselrichter dadurch gelöst, dass der Wechselrichter zur Bereitstellung und Sendung der Signale an die PV-Module, zur Messung der Gesamtleistungen und zur Ermittlung des Betriebsparameters bei dem Verfahren nach mindestens einem der Patentansprüche 1 bis 5 ausgebildet und eingerichtet ist.

Ein für eine Notabschaltung der PV-Module mittels unidirektionaler Kommunikation ausgebildeter Wechselrichter lässt sich somit für die Verwendung bei dem Verfahren nach mindestens einem der Patentansprüche 1 bis 5 ertüchtigen, indem lediglich die Steuervorrichtung des Wechselrichters entsprechend ausgebildet und eingerichtet wird, da die Sensoreinrichtung zur Messung einer Gesamtleistung der angeschlossenen PV-Module standardmäßig in jedem PV-Wechselrichter vorhanden ist.

Vorteilhafterweise kann weiter vorgesehen sein, dass der Wechselrichter eine Schnittstelle umfasst, welche für eine Übermittlung des Betriebsparameters ausgebildet und eingerichtet ist.

Über diese Schnittstelle kann beispielsweise der Betriebsparameter einer Leitwarte der PV-Anlage bereitgestellt werden.

Eine weitere Aufgabe der Erfindung ist es, eine Photovoltaik-Anlage der eingangs genannten Art anzugeben, mit welcher mit besonders geringem apparativem Aufwand das Verfahren nach mindestens einem der Patentansprüche 1 bis 5 durchführbar ist.

Die erfindungsgemäße Aufgabe wird bei einer derartigen Photovoltaik-Anlage dadurch gelöst, dass die PV-Anlage zur Durchführung des Verfahrens nach einem der Patentansprüche 1 bis 5 ausgebildet und eingerichtet ist.

Bezüglich möglicher Ausbildungen und Einrichtungen der PV-Anlage zur Durchführung des Verfahrens, insbesondere bezüglich der Ausbildungen und Einrichtungen der Empfangseinrichtungen, der Abschaltvorrichtungen, der leistungsoptimierenden Einrichtungen, der Sendeeinrichtung und der Steuervorrichtung des Wechselrichters der PV-Anlage sei auf die Ausführungen zu den Verfahrensansprüchen 1 bis 5 und der Vorrichtungsansprüche 6 und 7 verwiesen. Insbesondere kann der Wechselrichter der PV-Anlage vorteilhafterweise nach einem der Ansprüche 6 oder 7 ausgebildet sein.

Weitere zweckmäßige Ausgestaltungen und Vorteile der Erfindung sind Gegenstand der Beschreibung von Ausführungsbeispielen der Erfindung unter Bezug auf die Figuren der Zeichnung, wobei gleiche Bezugszeichen auf gleich wirkende Bauteile verweisen.

Dabei zeigt die
Fig. 1 schematisch eine PV-Anlage gemäß einem ersten Ausführungsbeispiels der Erfindung,
Fig. 2 schematisch ein PV-Modul mit einer leistungsoptimierenden Einrichtung und einer Abschaltvorrichtung gemäß einem zweiten Ausführungsbeispiel der Erfindung,
Fig. 3 einen Ablaufdiagramm eines Verfahrens gemäß einem dritten Ausführungsbeispiel der Erfindung,

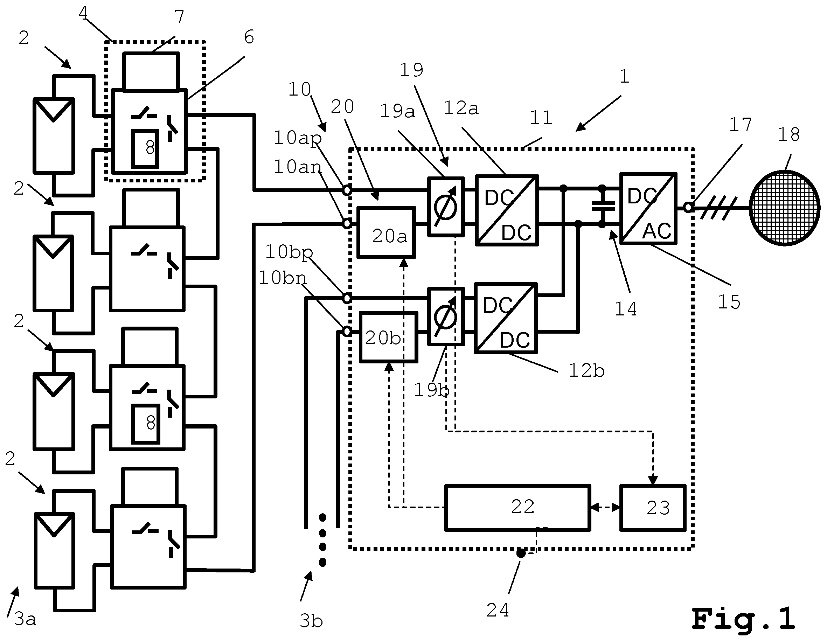

Die Figur 1 zeigt schematisch eine PV-Anlage 1 gemäß einem ersten Ausführungsbeispiel der Erfindung. Die gezeigte PV-Anlage 1 umfasst eine Mehrzahl an PV-Modulen 2, welche in Form von zwei Strings 3a und 3b angeordnet sind. Der Übersichtshalber ist der String 3b hierbei lediglich durch drei Punkte angedeutet. Jeder der beiden Strings 3a, 3b umfasst dabei eine Reihenschaltung von PV-Modulen 2, so dass sich deren Ausgangsspannungen entlang des jeweiligen Strings 3a, 3b addieren. Die PV-Module 2 umfassen jeweils eine Anschlussdose 4, über die das jeweilige PV-Modul 2 an die benachbarten PV-Module 2 angeschlossen und in die Reihenschaltung integriert ist. Nicht dargestellt ist eine in der Anschlussdose 4 untergebrachte Bypassdiode (nicht dargestellt), welche bei Bedarf das jeweilige PV-Modul 2 überbrückt. Die Anschlussdose 4 weist eine Abschaltvorrichtung 6 auf, die stilistisch durch die beiden Schalter gekennzeichnet ist. Die Abschaltvorrichtung 6 kann durch zwei Schalter wie bei dem in der Figur dargestellten Ausführungsbeispiel realisiert werden. Sie könnte aber auch mit nur einem Schalter und einer Diode realisiert werden. Die in den Anschlussdosen 4 mit dem Bezugszeichen 7 gekennzeichnete Komponente ist eine Empfangseinrichtung 7. Einige der Anschlussdosen 4 umfassen zusätzlich eine leistungsoptimierende Einrichtung 8. Diese leistungsoptimierende Einrichtung 8 kann wie bei dem in der Figur dargestellten Ausführungsbeispiel in der Anschlussdose 4 untergebracht sein. Sie kann aber beispielsweise ebenso gut zwischen der Anschlussdose 4 und der Stringleitung angeordnet sein. In beiden Fällen sei die leistungsoptimierende Einrichtung 8 begrifflich als von dem Solarmodul 2 umfasst bezeichnet. Es sei im Rahmen dieser Erfindung als Solarmodul 2 die Anordnung bezeichnet, die sowohl die Solarzellenanordnung mitsamt Rahmen und Befestigung als auch die Anschlussdose 4 und gegebenenfalls die leistungsoptimierende Einrichtung 8 umfasst. Die dargestellte PV-Anlage 1 umfasst auch einen Wechselrichter 11 mit einem DC-seitigen Anschluss 10, an den die beiden Strings 3a und 3b des Solargenerators angeschlossen sind. Der DC-seitige Anschluss 10 umfasst Anschlussklemmen 10ap, 10an, 10bp, 10bn. Dabei ist der String 3a mit beiden Polen an die Anschlussklemmen 10ap, 10an angeschlossen und über einen DC-DC-Wandler 12a elektrisch mit einem Zwischenkreis 14 des Wechselrichters 11 verbunden. Mit diesem Zwischenkreis 14 ist ebenfalls der String 3b über einen DC/DC-Wandler 12b elektrisch verbunden, wobei die beiden Pole des Strings 3b an die Anschlussklemmen 10bp und 10bn des DC-seitigen Anschluss des Wechselrichters 11 angeschlossen sind. Die Erfindung ist aber selbstverständlich nicht auf eine PV-Anlage 1 mit einem zweistufigen Wechselrichter 11 beschränkt, der derartige DC/DC-Wandler 12a, 12b am Zwischenkreis 14 umfasst. Die Stringanordnung könnte auch genauso gut an einen einstufigen Wechselrichter ohne derartige DC/DC-Wandler angeschlossen sein. An den Zwischenkreis 14 schließt sich ACseitig ein DC/AC-Wandler an mit einer Wechselrichterbrücke 15 zur Umwandlung von DC-Spannung in AC-Spannung, der elektrisch zwischen dem Zwischenkreis 14 und einem AC-seitigen Anschluss 17 des Wechselrichters 11 angeordnet ist. Mit dem AC-seitigen Anschluss 17 des Wechselrichters 11 ist der Wechselrichter 11 an ein Stromversorgungsnetz 18 angeschlossen. Die zur Durchführung eines Verfahrens nach mindestens einem der Ansprüche 1 bis 5 geeignete PV-Anlage umfasst zudem eine Sensoreinrichtung 19 mit Komponenten 19a und 19b, die in den beiden Leistungspfaden des Wechselrichters 11 angeordnet und zur Messung der von dem Solargenerator bereitgestellten Spannungs- und Stromwerte eingerichtet sind. Auch ist eine Sendevorrichtung 20 mit Komponenten 20a und 20b umfasst, die zur Sendung von Signalen über die Powerline-Leitung der Strings 3a und 3b eingerichtet ist. Eine Steuervorrichtung 22 zur Steuerung des Wechselrichterbetriebs und eine Auswerteeinheit 23 sind ebenfalls in dem Wechselrichter 11 gezeigt. Der Wechselrichter 11 umfasst auch eine Schnittstelle 24 zur Bereitstellung von Daten durch die Steuervorrichtung 22. Darüber hinaus sind nähere Details des Wechselrichters 11 übersichtshalber nicht dargestellt.

Die PV-Module 2 erzeugen bei Sonnenlicht elektrische Leistung, die dem Wechselrichter 11 an seinem DC-seitigen Anschluss 10 als DC-Spannung bereitgestellt wird. Durch Ansteuern von Leistungshalbleiterschaltern durch die Steuervorrichtung 22 kann mittels der DC/DC-Wandler 12a, 12b die DC-Spannung in eine Zwischenkreisspannung des Zwischenkreises 14 und von dem DC/AC-Wandler in eine für die Einspeisung in das Stromversorgungsnetz 18 geeignete AC-Spannung umgewandelt werden. Zur Ermittlung eines Betriebsparameters, der einen durch die leistungsoptimierenden Einrichtungen 8 (Optimizer) erzeugten Mehrertrag an elektrischer Leistung wiederspiegelt und folglich hierüber mindestens ein Gesamtbetrieb der leistungsoptimierenden Einrichtungen 8 überwacht, liest die Steuervorrichtung 22 über die Auswerteeinheit 23, die auch in die Steuervorrichtung 22 integriert sein kann oder als Teil der Sensoreinrichtung ausgebildet sein kann, einen Messwert für eine erste elektrische Gesamtleistung ein, nachdem die Steuervorrichtung 22 mittels der Sendevorrichtung 20 ein Abschaltsignal über die Powerline-Leitung an alle Empfangseinrichtungen 7 via unidirektionaler Kommunikation gesendet hat und noch keine Zeitspanne Δt vergangen ist. Die PV-Module 2 sind derart eingerichtet, dass die Empfangseinrichtung 7 das Abschaltsignal empfängt und einer Steuerung (nicht dargestellt) bereitstellt, welche die Abschaltvorrichtung 6 steuert und falls in dem jeweiligen PV-Modul 2 vorhanden, auch die leistungsoptimierende Einrichtung 8. Die Steuerung erkennt anhand einer Kennung des Abschaltsignals, dass es für eine gegebenenfalls vorhandene leistungsoptimierende Einrichtung 8 bestimmt ist. Sofern diese in dem PV-Modul vorhanden ist, überführt die Steuerung die leistungsoptimierende Einrichtung 8 von einem optimierenden Betrieb in einen nicht-optimierenden Betrieb und nach einer Zeitspanne Δt wieder zurück in den optimierenden Betrieb. Nach Ablauf der Zeitspanne Δt liest die Steuervorrichtung 22 einen Messwert für eine zweite Gesamtleistung ein und ermittelt anhand der Differenz einen Betriebsparameter, der den aktuellen durch die leistungsoptimierenden Einrichtungen 8 erzeugten Mehrertrag an elektrischer Leistung wiederspiegelt. Den Betriebsparameter stellt die Steuervorrichtung an der Schnittstelle 24 beispielsweise einer Fernwarte (nicht dargestellt) über eine Funkverbindung zur Verfügung.

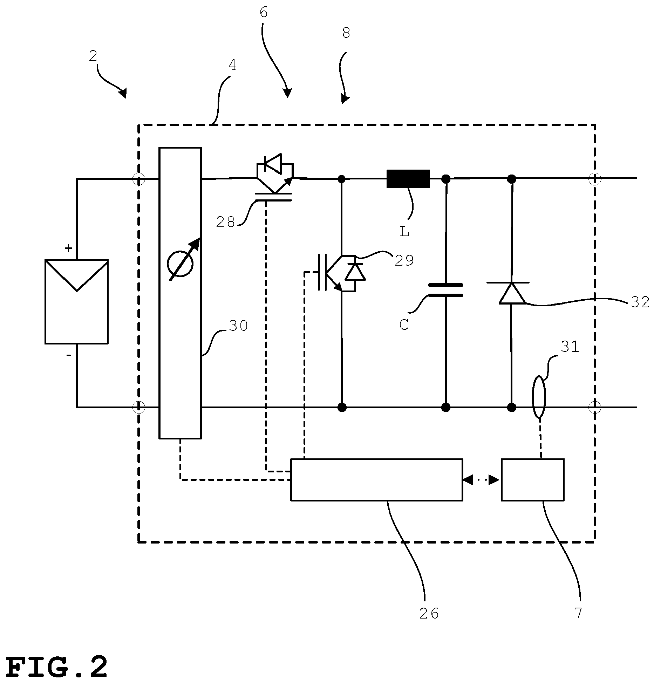

Die Figur 2 zeigt einen Ausschnitt der Figur 1 im Bereich eines PV-Moduls 2 mit einer vergrößert dargestellten Anschlussdose 4 gemäß einem zweiten Ausführungsbeispiel der Erfindung in schematischer Darstellung. Die Anschlussdose 4 umfasst in ihrem Inneren eine Abschaltvorrichtung 6, eine leistungsoptimierenden Einrichtung 8 und eine Empfangseinrichtung 7, wobei die leistungsoptimierende Einrichtung 8 auch die Bauteile der Abschaltvorrichtung 6 mitbenutzt. Die Abschaltvorrichtung 6 umfasst die beiden Halbleiterschalter 28 und 29 sowie die Steuerung 26. Die leistungsoptimierende Einrichtung 8 ist als tiefsetzender DC/DC-Wandler ausgebildet, der ebenfalls die beiden Halbleiterschalter 28 und 29 und die Steuerung 26 umfasst und zusätzlich eine Induktivität L, einen Kondensator C und eine Sensorik 30 umfasst. Die Abschaltvorrichtung 6 und die leistungsoptimierende Einrichtung 8 könnten beide aber genauso gut anstelle des Schalters 29 nur mittels der Diode des Schalters 29 realisiert werden, den ihrer beider Funktion hängt nicht davon ab, ob der Schalter geschaltet wird oder nicht. Der Betrieb von Abschaltvorrichtung 6 und leistungsoptimierender Einrichtung 8 funktioniert auch, wenn der Schalter 29 nicht geschaltet wird oder durch die Diode des Schalters 29 ersetzt wird. Die Figur 2 zeigt somit nur ein mögliches Ausführungsbeispiel. Auch sei noch erwähnt, dass der Schalter 28 zur Erhöhung der Sicherheit auch redundant mit zwei Schaltern in Reihe ausgeführt sein kann. Dies ist aber nicht zwingend erforderlich.

Die Empfangseinrichtung 7 ist kommunikativ an die Steuerung 26 angebunden und weist eine Sensorik 31 an der Powerline-Leitung auf zum Abgreifen von Befehlssignalen auf. Die Steuerung 26 schaltet in einem Einspeisebetrieb der Abschaltvorrichtung den Halbleiterschalter 28 leitend und den Halbleiterschalter 29 nichtleitend, wobei hiervon unabhängig der Halbleiterschalter 28 während eines optimierenden Betriebs der leistungsoptimierenden Einrichtung 8 getaktet betrieben wird. Erläuternd sei an dieser Stelle angemerkt, dass der leitende oder nichtleitende Schaltzustand der beiden Halbleiterschalter 28 und 29 sich auf den Hauptstrompfad der Halbleiterschalter beziehen soll, der von der Steuerung 26 über den Steueranschluss der Halbleiterschalter ansteuerbar ist und sich nicht beziehen soll auf den Strompfad durch die Bodydiode bzw. die Diode des Halbleiterschalters 28 und 29. Bei einem Abschaltbetrieb der Abschaltvorrichtung schaltet die Steuerung 26 den Halbleiterschalter 28 nichtleitend (und könnte den Halbleiterschalter 29 leitend schalten oder auch nicht), wobei die Steuerung 26 dafür sorgt, dass ein optimierender Betrieb der leistungsoptimierenden Einrichtung 8 bei diesem Betriebsmodus der Abschaltvorrichtung 6 nicht erfolgt. Bei dem Abschaltbetrieb der Abschaltvorrichtung 6 werden die beiden Ausgänge der Anschlussdose 4 über den leitenden Halbleiterschalter 29 oder über die Diode des nichtleitenden Halbleiterschalters 29 kurzgeschlossen und zusätzlich der Kondensator C entladen, so das das PV-Modul nach außen spannungslos ist. Bei einem Einspeisebetrieb der Abschaltvorrichtung 6 kann das PV-Modul gegenüber den anderen PV-Modulen des Strings verschattet sein, so dass dieses bei dem herrschenden Strom im String nicht in seinem MPP-Arbeitspunkt betrieben werden würde. In diesem Fall kann die Sensorik 30 den von dem PV-Modul gelieferten Strom- und Spannungswert messen und die Steuerung 26 den tiefsetzenden DC/DC-Wandler der leistungsoptimierenden Einrichtung 8 in einem optimierenden Betrieb so betreiben, das das PV-Modul an seinem MPP-Arbeitspunkt arbeitet (MPP = Maximum Power Point) unabhängig von einem im String herrschenden Stromwert.

Empfängt die Empfangseinrichtung 7 über die Powerline-Leitung ein Standard-Abschaltsignal für die Abschaltvorrichtung 6, wird von der Steuerung 26 der Halbleiterschalter 28 nichtleitend geschaltet. Dies schaltet gleichzeitig die leistungsoptimierende Einrichtung 8 aus. Empfängt die Empfangseinrichtung 7 nach kurzer Zeit ein Standard-Einspeisesignal für die Abschaltvorrichtung 6, wird von der Steuerung 26 für einen Einspeisebetrieb der Halbleiterschalter 28 leitend geschaltet. Die Steuerung 26 ist derart eingerichtet, dass sie erst nach einer vorgegebenen Zeitspanne den Halbleiterschalter 28 für eine Wiederaufnahme des optimierenden Betriebs der leistungsoptimierenden Einrichtung 8 wieder ansteuert.

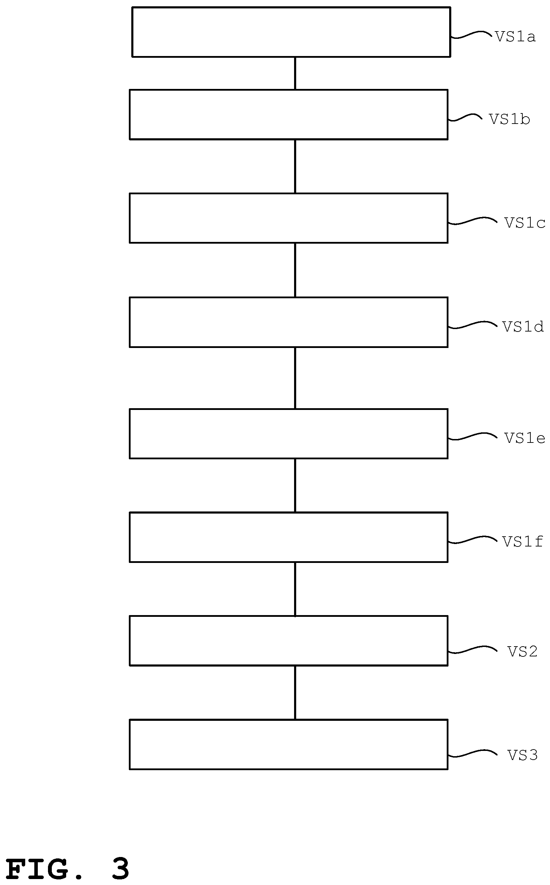

Die Figur 3 zeigt ein Ablaufdiagramm eines Verfahrens zur Ermittlung eines Betriebsparameters einer PV-Anlage gemäß einem dritten Ausführungsbeispiels der Erfindung.

Das Verfahren gemäß dem dritten Ausführungsbeispiel der Erfindung wird mit einer PV-Anlage durchgeführt, welche eine Mehrzahl an PV-Modulen und einen Wechselrichter umfasst, wobei die PV-Module jeweils eine Abschaltvorrichtung umfassen, welche kommunikativ mit einer Sendevorrichtung der PV-Anlage verbunden sind und einen Einspeisebetrieb und einen Abschaltbetrieb aufweisen, wobei mindestens ein PV-Modul mit einer leistungsoptimierenden Einrichtung ausgerüstet ist, welche dazu eingerichtet und ausgebildet ist, in einem optimierenden Betrieb einen Arbeitspunkt des PV-Moduls einzustellen. In einem Verfahrensschritt 1a sendet die Sendevorrichtung ein Abschaltsignal, welches von allen Empfangseinrichtungen der PV-Module empfangen wird. In einem Verfahrensschritt 1b veranlassen die Empfangseinrichtungen eine Steuerung des jeweiligen PV-Moduls, die Abschaltvorrichtungen in einen Abschaltbetrieb zu versetzen und bei PV-Modulen mit einer leistungsoptimierenden Einrichtung diese in einen nicht-optimierenden Betrieb zu versetzen. In einem Verfahrensschritt 1c sendet die Sendevorrichtung ein Einspeisesignal, welches von allen Empfangseinrichtungen der PV-Module empfangen wird. In einem Verfahrensschritt 1d veranlassen die Empfangseinrichtungen die Steuerung der jeweiligen PV-Module, die Abschaltvorrichtungen wieder in einen Einspeisebetrieb zu versetzen und bei PV-Modulen mit einer leistungsoptimierenden Einrichtung diese in einem Verfahrensschritt 1f zeitverzögert in einen optimierenden Betrieb zu versetzen, wobei vor der Wiederaufnahme des optimierenden Betriebs in einem Verfahrensschritt 1e eine erste elektrische Gesamtleistung der PV-Module innerhalb des Wechselrichters gemessen wird durch Messung mindestens eines entsprechenden Spannungswertes und durch Messung mindestens eines entsprechenden Stromwertes, und in einem Verfahrensschritt 2 nach der Wiederaufnahme des optimierenden Betriebs der leistungsoptimierenden Einrichtungen eine zweite elektrische Gesamtleistung der PV-Module gemessen wird durch Messung mindestens eines entsprechenden Spannungswertes und durch Messung mindestens eines entsprechenden Stromwertes und in einem Verfahrensschritt 3 ein Betriebsparameter von einer die Messwerte empfangenden Steuervorrichtung des Wechselrichters ermittelt wird mittels der Differenz der ersten und zweiten elektrischen Gesamtleistung.

### Bezugszeichenliste

| | |
|---|---|
| 1 | PV-Anlage |
| 2 | PV-Modul |
| 3a, 3b | String |
| 4 | Anschlussdose |
| 6 | Abschaltvorrichtung |
| 7 | Empfangseinrichtung |
| 8 | Leistungsoptimierende Einrichtung |
| 10 | DC-seitiger Anschluss |
| 10ap, 10an, 10bp, 10bn | Anschlussklemmen |
| 11 | Wechselrichter |
| 12a, 12b | DC/DC-Wandler |
| 14 | Zwischenkreis |
| 15 | Wechselrichterbrücke |
| 17 | AC-seitiger Anschluss |
| 18 | Stromversorgungsnetz |
| 19 | Sensoreinrichtung |
| 19a, 19b | Komponenten |
| 20 | Sendevorrichtung |
| 20a, 20b | Komponenten |
| 22 | Steuervorrichtung |
| 23 | Auswerteeinheit |
| 24 | Schnittstelle |
| 26 | Steuerung |
| 28, 29 | Halbleiterschalter |
| 30, 31 | Sensorik |
| L | Induktivität |
| C | Kondensator |
| VS1a, VS1b, VS1c, VS1d, VS1e, VS1f, VS2, VS3 | Verfahrensschritt |

## Patentansprüche

1. Verfahren zur Ermittlung eines Betriebsparameters einer PV-Anlage (1) mit einer Mehrzahl an PV-Modulen (2), wobei die PV-Module (2) jeweils eine Abschaltvorrichtung (6) umfassen, welche kommunikativ mit einer Sendevorrichtung (20) der PV-Anlage (1) verbunden sind und einen Einspeisebetrieb und einen Abschaltbetrieb aufweisen, wobei mindestens ein PV-Modul (2) mit einer leistungsoptimierenden Einrichtung (8) ausgerüstet ist, welche dazu eingerichtet und ausgebildet ist, in einem optimierenden Betrieb einen Arbeitspunkt maximaler Leistung (MPP) des PV-Moduls (2) einzustellen,
**dadurch gekennzeichnet, dass**
bei dem Verfahren zur Ermittlung des Betriebsparameters in einem ersten Verfahrensschritt der optimierende Betrieb aller leistungsoptimierenden Einrichtungen der PV-Anlage in Folge eines von der Sendevorrichtung an alle PV-Module übermittelten Abschaltsignals in einen nicht-optimierenden Betrieb überführt wird, wobei das Abschaltsignal von einer Empfangseinrichtung eines jeden PV-Moduls empfangen wird (VS1a, VS1b), wobei in dem ersten Verfahrensschritt (VS1a, VS1b, VS1c, VS1d, VS1e, VS1f) bei nicht-optimierendem Betrieb der leistungsoptimierenden Einrichtungen (8) und bei Einspeisebetrieb der Abschaltvorrichtungen (6) eine erste elektrische Gesamtleistung der PV-Module (2) bestimmt wird, wobei in einem zweiten Verfahrensschritt (VS2) bei optimierendem Betrieb aller leistungsoptimierenden Einrichtungen (8) und bei Einspeisebetrieb der Abschaltvorrichtungen (6) eine zweite elektrische Gesamtleistung der PV-Module (2) bestimmt wird, und wobei der Betriebsparameter mittels einer Differenz der beiden Gesamtleistungen bestimmt wird (VS3).

2. Verfahren nach Anspruch 1, **dadurch gekennzeichnet, dass** in einem Zeitraum mehrfach die beiden Verfahrensschritte (VS1a - VS1f, VS2) aufeinanderfolgend durchgeführt werden, wobei der Betriebsparameter mittels eines über den Zeitraum gemittelten Durchschnittswerts der jeweiligen Differenzen der beiden Gesamtleistungen ermittelt wird.

3. Verfahren nach Anspruch 1 oder 2, **dadurch gekennzeichnet, dass** in Folge des Empfangs des Abschaltsignals durch die Empfangseinrichtungen (7) der PV-Module (2) die Abschaltvorrichtungen (6) in einen Abschaltbetrieb wechseln und bei den PV-Modulen (2) mit einer leistungsoptimierenden Einrichtung (8) diese in einen nicht-optimierenden Betrieb wechseln (VS1a, VS1b), und die Sendevorrichtung (20) anschließend an alle PV-Module (2) ein Einspeisesignal sendet (VS1c), wobei in Folge des Empfangs des Einspeisesignals durch die Empfangseinrichtungen (7) der PV-Module (2) die Abschaltvorrichtungen (6) in einen Einspeisebetrieb wechseln (VS1d) und bei PV-Modulen (2) mit einer leistungsoptimierenden Einrichtung (8) diese zeitverzögert den optimierenden Betrieb wieder aufnimmt (VS1f), und die erste elektrische Gesamtleistung nach dem Betriebswechsel der Abschaltvorrichtungen (6) zurück in den Einspeisebetrieb und vor dem Betriebswechsel der leistungsoptimierenden Einrichtungen (8) in den optimierenden Betreib gemessen wird (VS1e).

4. Verfahren nach Anspruch 1 oder 2, **dadurch gekennzeichnet, dass** in Folge des Empfangs des Abschaltsignals durch die Empfangseinrichtung (7) der PV-Module (2) der Betrieb der Abschaltvorrichtungen (6) hiervon unberührt bleibt, wobei bei den PV-Modulen (2) mit einer leistungsoptimierenden Einrichtung (8) diese den optimierenden Betrieb einstellen und die erste elektrische Gesamtleistung nach der Einstellung des optimierenden Betriebs und vor dessen Wiederaufnahme gemessen wird.

5. Wechselrichter (11) für eine PV-Anlage (1) mit einer Mehrzahl an PV-Modulen (2), mit mindestens
- einem DC-seitigen Anschluss (10) für mindestens ein PV-Modul (2),
- einem AC-seitigen Anschluss (17) für ein Stromversorgungsnetz (18),
- einer Wechselrichterbrücke (15) zur Umwandlung von DC-Spannung in AC-Spannung,
- einer Sendevorrichtung (20) und einer die Sendevorrichtung (20) ansteuernden Steuervorrichtung (22) zur Steuerung des Wechselrichterbetriebs sowie einer unidirektionalen Kommunikation des Wechselrichters (11) via der Sendevorrichtung (20) mit den PV-Modulen (2),
- einer Sensoreinrichtung (19), welche zur Messung einer von den PV-Modulen (2) an den Wechselrichter (11) gelieferten elektrischen Gesamtleistung ausgebildet und eingerichtet ist und zur Übertragung der Messwerte an die Steuervorrichtung (22) mit dieser kommunikativ verbunden ist,
**dadurch gekennzeichnet, dass**
der Wechselrichter (11) zur Bereitstellung und Sendung der Signale an die PV-Module (2), zur Messung der elektrischen Gesamtleistungen und zur Ermittlung des Betriebsparameters bei dem Verfahren nach mindestens einem der Ansprüche 1 bis 4 ausgebildet und eingerichtet ist.

6. Wechselrichter (11) nach Anspruch 5, **dadurch gekennzeichnet, dass** der Wechselrichter (11) eine Schnittstelle (24) umfasst, welche für eine Übermittlung des Betriebsparameters ausgebildet und eingerichtet ist.

7. PV-Anlage (1) mit einem Wechselrichter (11) und einer Mehrzahl an PV-Modulen (2), wobei die PV-Module (2) jeweils eine Abschaltvorrichtung (6) umfassen, welche kommunikativ mit einer Sendevorrichtung (20) der PV-Anlage (1) verbunden sind und einen Einspeisebetrieb und einen Abschaltbetrieb aufweisen, wobei mindestens ein PV-Modul (2) mit einer leistungsoptimierenden Einrichtung (8) ausgerüstet ist, welche dazu eingerichtet und ausgebildet ist, in einem optimierenden Betrieb einen Arbeitspunkt des PV-Moduls (2) einzustellen,
**dadurch gekennzeichnet, dass**
die PV-Anlage (1) zur Durchführung des Verfahrens nach einem der Ansprüche 1 bis 4 ausgebildet und eingerichtet ist.

8. PV-Anlage (1) nach Anspruch 7, **dadurch gekennzeichnet, dass** der Wechselrichter (11) nach einem der Ansprüche 5 oder 6 ausgebildet ist.

## Claims

1. A method for determining an operating parameter of a PV installation (1) having a plurality of PV modules (2), wherein the PV modules (2) each comprise a shutdown apparatus (6) which is communicatively connected to a transmission apparatus (20) of the PV installation (1) and has feed-in operation and shutdown operation, wherein at least one PV module (2) is equipped with a power-optimizing device (8) which is set up and configured to set a maximum power point (MPP) as an operating point of the PV module (2) in optimizing operation,
**characterized in that**
in the method for determining the operating parameter, in a first method step, the optimizing operation of all power-optimizing devices of the PV installation is transferred to a non-optimizing operation as a result of a shutdown signal transmitted by the transmission apparatus to all PV modules, wherein the shutdown signal is received by a reception device of each PV module (VS1a , VS1b), wherein in the first method step (VS1a, VS1b, VS1c, VS1d, VS1e, VS1f) in non-optimizing operation of the power-optimizing devices (8) and in feed-in operation of the shutdown apparatuses (6), a first total electrical power of the PV modules (2) is determined, wherein in a second method step (VS2) in optimizing operation of all power-optimizing devices (8) and in feed-in operation of the shutdown apparatuses (6), a second total electrical power of the PV modules (2) is determined, wherein the operating parameter is determined by means of a difference between the two total powers (VS3).

2. The method according to claim 1, **characterized in that** the two method steps (VS1a - VS1f, VS2) are carried out consecutively several times over a period of time, wherein the operating parameter is determined by means of an average value of the respective differences between the two total powers averaged over the period of time.

3. The method according to claim 1 or 2, **characterized in that**, as a result of the reception of the shutdown signal by the reception devices (7) of the PV modules (2), the shutdown apparatuses (6) change to shutdown operation and, in the case of the PV modules (2) having a power-optimizing device (8), the power-optimizing device (8) changes to non-optimizing operation (VS1a, VS1b), and the transmission apparatus (20) subsequently sends a feed-in signal (VS1c) to all PV modules (2), wherein, as a result of the reception of the feed-in signal by the reception devices (7) of the PV modules (2), the shutdown apparatuses (6) change to feed-in operation (VS1d) and, in the case of PV modules (2) having a power-optimizing device (8), the power-optimizing device (8) resumes optimizing operation (VS1f) with a time delay, and wherein the first total electrical power is measured after the shutdown apparatuses (6) have changed back to feed-in operation and before the power-optimizing devices (8) change to optimizing operation (VS1e).

4. The method according to claim 1 or 2, **characterized in that**, as a result of the reception of the shutdown signal by the reception device (7) of the PV modules (2), the operation of the shutdown apparatuses (6) remains unaffected thereby, wherein, in the case of the PV modules (2) with a power-optimizing device (8), these modules stop the optimizing operation and the first total electric power is measured after the optimizing operation has been stopped and before it is resumed.

5. An inverter (11) for a PV installation (1) having a plurality of PV modules (2), having at least
- a DC-side connection (10) for at least one PV module (2),
- an AC-side connection (17) for a power supply grid (18),
- an inverter bridge (15) for converting DC voltage into AC voltage,
- a transmission apparatus (20) and a control apparatus (22) that activates the transmission apparatus (20) for controlling an operation of the inverter and an unidirectional communication between the inverter (11) and the PV modules (2) via the transmission apparatus (20),
- a sensor device (19) which is configured and set up to measure a total electrical power supplied by the PV modules (2) to the inverter (11) and is communicatively connected to the control apparatus (22) for transmission of the measured values to the latter,
**characterized in that**
the inverter (11) is configured and set up to provide and transmit the signals to the PV modules (2), to measure the total electrical powers and to determine the operating parameter in the method according to at least one of claims 1 to 4.

6. The inverter (11) according to claim 5, **characterized in that** the inverter (11) comprises an interface (24) which is configured and set up for transmission of the operating parameter.

7. A PV installation (1) having an inverter (11) and a plurality of PV modules (2), wherein the PV modules (2) each comprise a shutdown apparatus (6) which is communicatively connected to a transmission apparatus (20) of the PV installation (1) and has feed-in operation and shutdown operation, wherein at least one PV module (2) is equipped with a power-optimizing device (8) which is set up and configured to set an operating point of the PV module (2) in optimizing operation,
**characterized in that**
the PV installation (1) is configured and set up to perform the method according to one of claims 1 to 4.

8. A PV installation (1) according to claim 7, **characterized in that** the inverter (11) is configured according to one of claims 5 or 6.

## Revendications

1. Procédé de détermination d'un paramètre de fonctionnement d'une installation photovoltaïque (1) comportant une pluralité de modules photovoltaïques (2), les modules photovoltaïques (2) comprenant chacun un dispositif de coupure (6) qui est relié à un dispositif d'émission (20) de l'installation photovoltaïque (1) et présentant un mode d'injection et un mode de coupure, au moins un module photovoltaïque (2) étant équipé d'un dispositif d'optimisation de puissance (8) qui est conçu et agencé pour régler, dans un mode d'optimisation, un point de fonctionnement de puissance maximale (MPP) du module photovoltaïque (2),
**caractérisé en ce que:**
dans le procédé de détermination du paramètre de fonctionnement, lors d'une première étape du procédé, le fonctionnement en mode d'optimisation de tous les dispositifs d'optimisation de la puissance de l'installation photovoltaïque est commuté vers un mode de non-optimisation à la suite d'un signal de coupure transmis par le dispositif d'émission à tous les modules photovoltaïques, le signal de coupure étant reçu par un dispositif de réception de chaque module photovoltaïque (VS1a, VS1b), une première puissance électrique totale des modules photovoltaïques (2) est déterminée au cours de la première étape du procédé (VS1a, VS1b, VS1c, VS1d, VS1e, VS1f) lorsque les dispositifs d'optimisation de puissance (8) fonctionnent en mode non optimisé et que les dispositifs de coupure (6) sont en mode d'injection ; dans une deuxième étape du procédé (VS2), en mode d'optimisation de tous les dispositifs d'optimisation de puissance (8) et en mode d'injection des dispositifs de coupure (6), une deuxième puissance électrique totale des modules photovoltaïques (2) est déterminée, et le paramètre de fonctionnement étant déterminé au moyen d'une différence entre les deux puissances totales (VS3).

2. Procédé selon la revendication 1, **caractérisé en ce que**, au cours d'une période donnée, les deux étapes de procédé (VS1a - VS1f, VS2) sont exécutées plusieurs fois de manière successive, le paramètre de fonctionnement étant déterminé à l'aide d'une valeur moyenne, calculée sur cette période, des différences respectives entre les deux puissances totales.

3. Procédé selon la revendication 1 ou 2, **caractérisé en ce que**, à la suite de la réception du signal de coupure par les dispositifs de réception (7) des modules photovoltaïques (2), les dispositifs de coupure (6) passent en mode de coupure et, au niveau des modules photovoltaïques (2) équipés d'un dispositif d'optimisation de puissance (8), ceux-ci passent en mode de fonctionnement sans optimisation (VS1a, VS1b), et le dispositif d'émission (20) envoie ensuite un signal d'injection (VS1c) à tous les modules photovoltaïques (2), les dispositifs de coupure (6) passant en mode d'injection à la suite de la réception du signal d'injection par les dispositifs de réception (7) des modules photovoltaïques (2) (VS1d) et, pour les modules photovoltaïques (2) équipés d'un dispositif d'optimisation de puissance (8), celui-ci reprend le mode d'optimisation avec un retard (VS1f), et la première puissance électrique totale est mesurée après le passage des dispositifs de coupure (6) en mode d'injection et avant le passage des dispositifs d'optimisation de puissance (8) en mode d'optimisation (VS1e).

4. Procédé selon la revendication 1 ou 2, **caractérisé en ce que**, à la suite de la réception du signal de coupure par le dispositif de réception (7) des modules photovoltaïques (2), le fonctionnement des dispositifs de coupure (6) n'est pas affecté par la réception du signal de coupure, les modules photovoltaïques (2) équipés d'un dispositif d'optimisation de puissance (8) cessant alors de fonctionner en mode d'optimisation, et la première puissance électrique totale étant mesurée après l'arrêt du mode d'optimisation et avant sa reprise.

5. Onduleur (11) pour une installation photovoltaïque (1) comprenant une pluralité de modules photovoltaïques (2), comportant au moins
- un raccordement côté courant continu (10) pour au moins un module photovoltaïque (2),
- un raccordement côté courant alternatif (17) pour un réseau d'alimentation électrique (18),
- un pont onduleur (15) destiné à la conversion de la tension continue en tension alternative,
- un dispositif d'émission (20) et un dispositif de commande (22) pilotant le dispositif d'émission (20) pour commander le fonctionnement de l'onduleur ainsi qu'une communication unidirectionnelle entre l'onduleur (11) et les modules photovoltaïques (2) via le dispositif d'émission (20),
- un dispositif capteur (19) qui est conçu et agencé pour mesurer la puissance électrique totale fournie par les modules photovoltaïques (2) à l'onduleur (11) et qui est relié de manière communicative au dispositif de commande (22) afin de transmettre les valeurs mesurées à ce dernier,
**caractérisé en ce que**
l'onduleur (11) est conçu et configuré pour fournir et transmettre les signaux aux modules photovoltaïques (2), pour mesurer les puissances électriques totales et pour déterminer le paramètre de fonctionnement selon le procédé visé dans au moins l'une des revendications 1 à 4.

6. Onduleur (11) selon la revendication 5, **caractérisé en ce que** l'onduleur (11) comprend une interface (24) conçue et agencée pour transmettre le paramètre de fonctionnement.

7. Installation photovoltaïque (1) comprenant un onduleur (11) et une pluralité de modules photovoltaïques (2), les modules photovoltaïques (2) comprenant chacun un dispositif de coupure (6) qui est relié en communication avec un dispositif d'émission (20) de l'installation photovoltaïque (1) et qui présente un mode d'injection et un mode de coupure, au moins un module photovoltaïque (2) est équipé d'un dispositif d'optimisation de puissance (8), qui est conçu et agencé pour régler, en mode d'optimisation, un point de fonctionnement du module photovoltaïque (2),
**caractérisée en ce que**
l'installation photovoltaïque (1) est conçue et agencée pour mettre en œuvre le procédé selon l'une des revendications 1 à 4.

8. Installation photovoltaïque (1) selon la revendication 7, **caractérisée en ce que** l'onduleur (11) est conçu selon l'une des revendications 5 ou 6.
